Europäisches Patentamt

European Patent Office

Office européen des brevets

(11) Publication number: **0 186 941**
A1

(12) **EUROPEAN PATENT APPLICATION**

(21) Application number: **85307278.3**

(22) Date of filing: **11.10.85**

(51) Int. Cl.⁴: **H 04 L  11/00,** H 04 L  11/16,
H 04 Q  3/52

(30) Priority: **02.11.84  GB 8427748**

(43) Date of publication of application: **09.07.86**
**Bulletin 86/28**

(84) Designated Contracting States: **AT BE CH DE FR IT LI
LU NL SE**

(71) Applicant: **PLESSEY OVERSEAS LIMITED, Vicarage
Lane, Ilford Essex IGI 4AQ (GB)**

(72) Inventor: **Beaufoy, Raymond, 1 Conway Road Taplow,
Maidenhead Berkshire (GB)**
Inventor: **Delaney, Frank Michael, Westwood Swinley
Road, Ascot Berkshire (GB)**

(74) Representative: **Sorenti, Gino, Intellectual Property
Department The Plessey Company plc 2-60 Vicarage
Lane, Ilford Essex IG1 4AQ (GB)**

(54) **Matrix interconnected local area networks.**

㊳ The matrix is for use in providing a switched interface
for linking together a number of local area networks (LAN's)
of differing types. Each LAN has a transmit and receive bus
to which all its stations are connected either directly by wire
or via an optic fibre to a matrix switch which can either be
an optical or an electronic switch. The switch cross-points
are driven so as to connect each pair of transmit and re-
ceive busses together in sequence. The sequence can be
determined within the matrix switch and can involve differ-
ing time periods to suit traffic predictions. Alternatively the
switch may be arranged to monitor the traffic flow from each
LAN and be able to influence switching periods accordingly.
Each LAN has a master station which applies a unique call
sign on its transmit highway to the switch between traffic
periods and monitors its receive highway to detect the call
sign of the LAN to which it is currently connected via the
switch. When for example LANA detects call sign B, after a
guard period it stops its call sign and allows the LAN system
to transmit traffic intended for LANB and vice versa. After a
fixed period of time based upon the predetermined switch
timing LANA master station starts to send its call sign again
ready for switching to a different LAN.

TITLE:  A SYSTEM OF MATRIX INTERCONNECTED

LOCAL AREA NETWORKS

The present invention relates to a system of matrix interconnected local area networks for the transmission of information between user terminals and equipment, e.g. databases, and access stations to other networks.

Hitherto, systems of local area networks have been based on a common highway or bus to which user stations are connected in a parallel, or on a ring configuration in which tandem nodes have user stations connected to them.  The total bit rate available to the users is limited by the operational bit rate of the common bus or ring.

There are various ways known in the prior art of linking together a system comprising a number of local area networks.  This is accomplished for example, by having stations or nodes common to two buses or rings, or by, using a number of buses or rings in parallel. However, they suffer from limited flexibility and do not always provide the combined total bit rate of the local area networks in the system.

Accordingly, it is an object of the present invention to provide a system of interconnected local area networks which have an improved total bit rate and improved flexibility over known systems.

It is a further object of the invention to provide a system of interconnected local area networks which can handle a wider range of traffic types with improved reliability over known systems.

According to the present invention there is provided a system of matrix interconnected local area networks, wherein a switching matrix provides a switched interface for linking together a number of local area networks, each network being provided with transmit and receive buses to which all its user terminals are connected, the buses further being connected to the switching matrix in a manner that enables the transmit and receive buses of different networks to be connected together in a particular sequence; each local area network is further provided with a master station for applying a unique call sign on its transmit bus to the switching matrix, and for monitoring its receive bus to detect the call sign of the local area network to which it is currently connected via the switching matrix, so that when a master station of a local area network detects a call sign of a different network it stops transmitting its call sign to allow the different network and the detecting network to communicate with each other.

An embodiment of the present invention will now be described with reference to the accompanying drawings in which:

Figure 1 shows a system comprising a number of local area networks connected to a switching matrix,

Figure 2 shows the switching matrix interconnections for the local area networks, together with Table 1 showing a typical cross-point connection sequence,

Figure 3 shows part of the switching matrix interconnections shown in Figure 2, together with an example of switching transistors at the interconnections; and the control signals.

Figure 4a shows a transmit signal for a local area network LAN A; and,

Figure 4b shows a receive signal for the local area network LAN A.

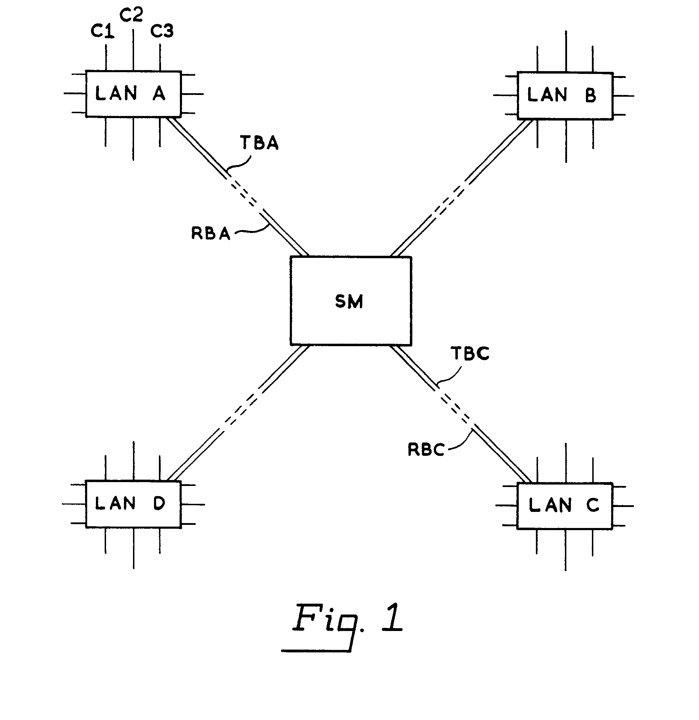

Referring to Figure 1, four local area networks LAN A, LAN B, LAN C and LAN D are shown. Each network is interconnected to a switching matrix SM by way of a transmit bus TBA and a receive bus RBA, for example. The buses may conveniently be optical fibre links or wires. Each local area network is provided with connections, such as C1-C3 for the connection of user terminals and other equipment to the system. All the user terminals are connected to the local area network by way of isolation circuits, to reduce the effect of faults on the system.

The switching matrix SM takes the form of an optical matrix where optical fibre links are used for buses TB, RB, or the form of an electronic switching matrix where wires are used for the buses. With suitable conversion either switch type can be used with either transmission medium.

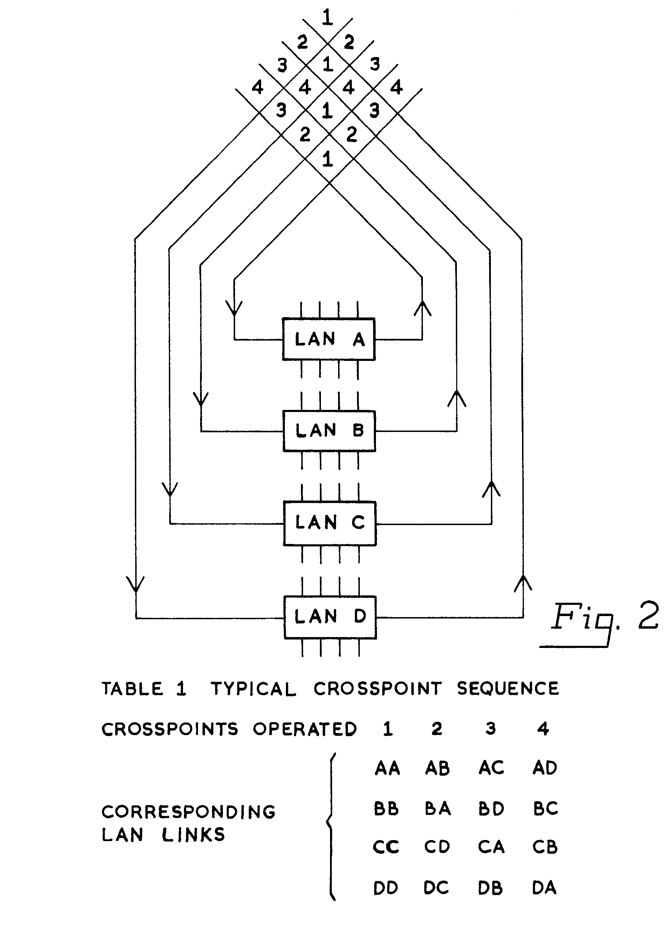

The switching matrix comprises a number of switch cross-points but may be realised in any known configuration, e.g. a lattice arrangement as is currently used for optical switches. The switches are driven so as to connect each pair of transmit and receive buses TBA, RBA, for example, with another pair of buses, RBC, TBC for example. The switching matrix is shown in Figure 2, and in the present embodiment four pairs of buses are connected at a time, and the connection sequence is shown in Table 1. Therefore, there are four pairs of buses each carrying the local network bit rate.

The timing of the sequence of Table 1 can be determined internally to the switching matrix SM by a pre-set sequential wave form generator driving the switches, and if required, the timing of the connection of four pairs can be made different to suit traffic predictions. Alternatively, the switching matrix can monitor the traffic flowing from each local area network and influence switching periods by the traffic pattern, within certain limits.

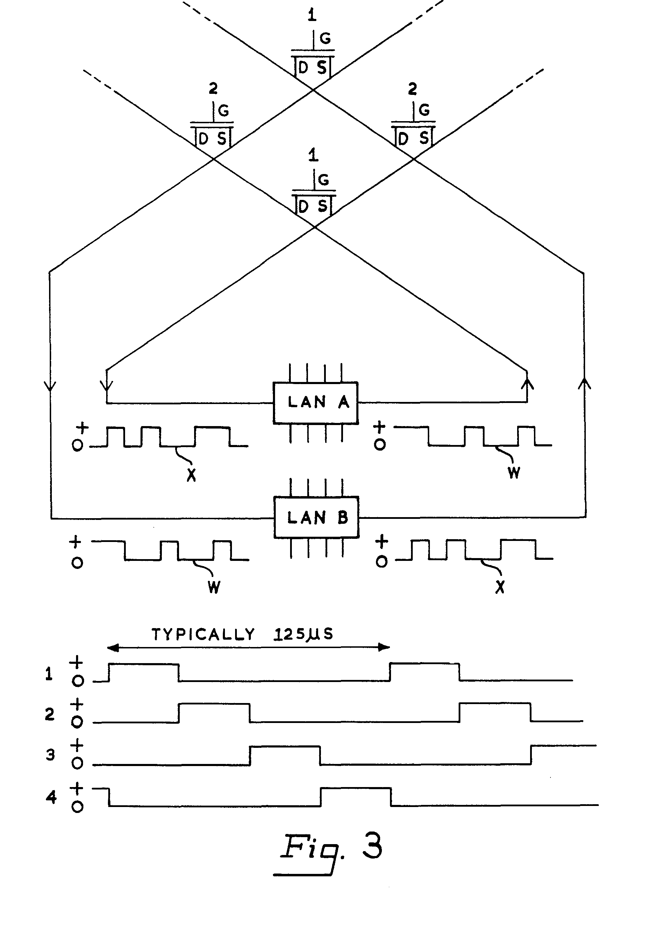

Referring to Figure 3, each interconnection is made by metal oxide silicon (MOS) transistor having a controlling gate G, and connections D and S connected to respective local area network outputs and inputs. The control signals 1-4 are shown, and in Figure 3, the control signals 1 and 2 are presented to the controlling gates of the transistors to permit the output W of local area network LAN A to be switched to the input of local area network LAN B; and the output X of local area network LAN B to be switched to the input of local area network LAN A.

To achieve the above switching conditions, control signal 1 is at 0 volts, while control signal 2 is positive. The control signals may be free running or may be derived from the system and clocked if synchronism is required.

Each local area network is provided with a master station which applies a unique call sign on its transmit bus traffic periods. All stations monitor their receive bus to detect the call sign of the local area network to which they are currently connected by way of the switching matrix.

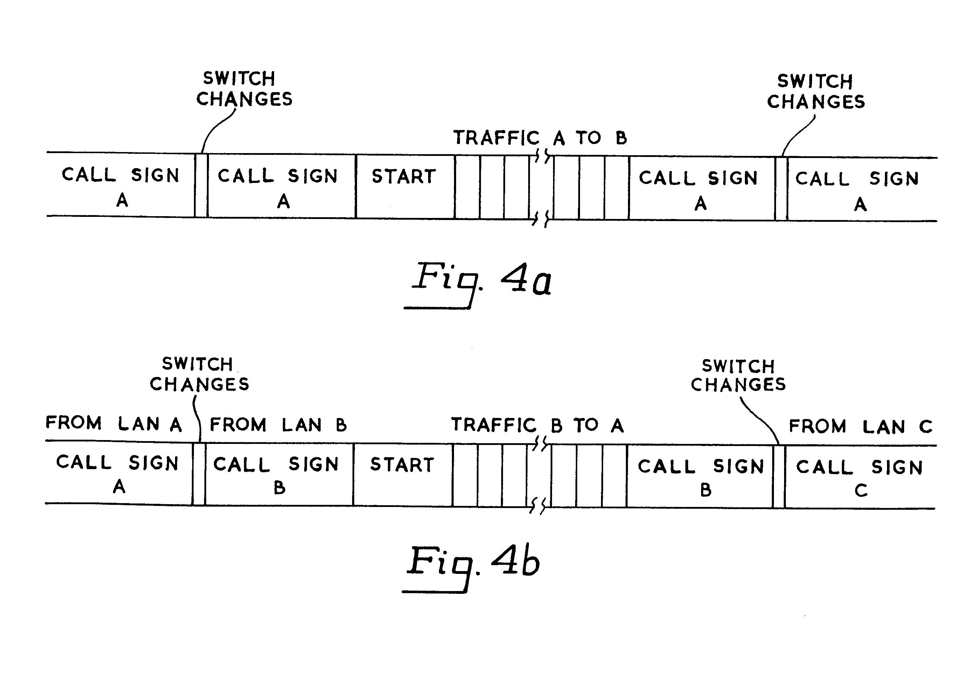

Referring to Figures 4a and 4b, the transmit and receive signals for local area network LAN A are shown by way of an example. When the local area network master station of LAN A detects call sign B, after a guard period it stops its call sign and allows the system to transmit traffic intended for local area network LAN B and vice versa. After a fixed period of time based on the predetermined switching matrix timing, the master station for local area network LAN A starts to send its call sign again thus inhibiting further traffic, ready for switching to a different local area network, for example, LAN C. If preferred LAN A when transmitting to LAN B can for example receive from LAN C rather than LAN B.

The local area networks can be of known types, suitably modified for this method of networking and can carry a mixture of voice, data and video. The working bit rates of local area networks are constantly being improved, and with four networks as described, a total traffic working bit rate approaching four times the rate of a single network can be achieved in a wide area network.

Furthermore, the local area networks could take the form of a telecommunication exchange, such as a private automatic branch exchange PABX, suitably modified, where the PABX local highways are sequentially linked by way of the matrix switch.

WHAT WE CLAIM IS:

1.    A system of matrix interconnected local area networks, wherein a switching matrix provides a switched interface for linking together a number of local area networks, each network being provided with transmit and receive buses to which all its user terminals are connected, the buses further being connected to the switching matrix in a manner that enables the transmit and receive buses of different networks to be connected together in a particular sequence; each local area network is further provided with a master station for applying a unique call sign on its transmit bus to the switching matrix, and for monitoring its receive bus to detect the call sign of the local area network to which it is currently connected via the switching matrix, so that when a master station of a local area network detects a call sign of a different network it stops transmitting its call sign to allow the different network and the detecting network to communicate with each other.

2.    A system of matrix interconnected local area networks as claimed in claim 1, wherein each master station, after a fixed period of time, re-transmits its call sign to inhibit further communication, ready for switching to a different local area network.

3.    A system of matrix interconnected local area networks as claimed in claim 1 or 2, wherein the buses are wire buses, and the switching matrix comprises a plurality of switching transistors.

4. A system of matrix interconnected local area networks as claimed in claim 1 or 2 wherein the buses are optional fibre links, and the switching matrix comprises a plurality of optical switching devices.

5. A system of matrix interconnected local area networks as claimed in any preceding claim, wherein the local area networks are telecommunication exchanges.

Fig. 1

*Fig. 2*

TABLE 1  TYPICAL CROSSPOINT SEQUENCE

| CROSSPOINTS OPERATED | 1 | 2 | 3 | 4 |
|---|---|---|---|---|
| CORRESPONDING LAN LINKS | AA | AB | AC | AD |
| | BB | BA | BD | BC |
| | CC | CD | CA | CB |
| | DD | DC | DB | DA |

_Fig._ 3

SWITCH
CHANGES

SWITCH
CHANGES

TRAFFIC A TO B

| CALL SIGN A | CALL SIGN A | START | | | CALL SIGN A | CALL SIGN A |

Fig. 4a

SWITCH
CHANGES

SWITCH
CHANGES

FROM LAN A | FROM LAN B | TRAFFIC B TO A | FROM LAN C

| CALL SIGN A | CALL SIGN B | START | | | CALL SIGN B | CALL SIGN C |

Fig. 4b

0 186 941

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 067 431 (SIEMENS)<br>* Page 12, lines 3-15; page 13, line 1 - page 15, line 7 * | 1,4 | H 04 L 11/00<br>H 04 L 11/16<br>H 04 Q 3/52 |
| | --- | | |
| A | WO-A-8 203 740 (NCR)<br>* Abstract * | 1,3,4 | |
| | ----- | | |

**TECHNICAL FIELDS SEARCHED (Int. Cl.4)**

H 04 L
G 06 F
H 04 Q

The present search report has been drawn up for all claims

| Place of search | Date of completion of the search | Examiner |
|---|---|---|
| THE HAGUE | 11-03-1986 | MIKKELSEN C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82